# EUROPÄISCHE PATENTSCHRIFT

(11) **EP 2 603 346 B1**
(45) Veröffentlichungstag und Bekanntmachung des Hinweises auf die Patenterteilung: **13.01.2016**
(21) Anmeldenummer: 11757528.2
(22) Anmeldetag: 10.08.2011
(51) Int. Cl.: B23K 20/12, B23K 37/02

(54) **VORRICHTUNG ZUM REIBRÜHRSCHWEISSEN**
DEVICE FOR FRICTION STIR WELDING
DISPOSITIF DE SOUDAGE PAR FRICTION-MALAXAGE

(30) Priorität: 11.08.2010 AT 13472010
(43) Veröffentlichungstag der Anmeldung: 19.06.2013
(73) Patentinhaber: Stirtec GmbH, 8077 Gössendorf (DE)
(72) Erfinder: FIGNER, Gunter, A-8010 Graz (AT); FIGNER, Gunter, A-8010 Graz (AT)
(74) Vertreter: Patentanwaltskanzlei Matschnig & Forsthuber OG
(86) Internationale Anmeldenummer: PCT/AT2011/000340
(87) Internationale Veröffentlichungsnummer: WO 2012/019210

(56) Entgegenhaltungen:
- EP-A1- 1 736 271
- WO-A1-2006/011685
- US-A1- 2001 011 672

## Beschreibung

Die Erfindung bezieht sich auf eine Vorrichtung zur Herstellung einer Schweißnaht an Werkstücken durch Reibrührschweißen, das einen Schweißkopf mit einem rotierenden Rührreibschweißwerkzeug aufweist, welcher längs des Fügebereiches geführt und bezüglich des Werkstückes abgestützt ist, wobei eine Schiene zur Abstützung eines mit dem Schweißkopf oder dem Reibrührschweißwerkzeug mechanisch verbundenen Gegenstück vorgesehen ist (siehe EP-A-1736271). Das Reibrührschweißen erfordert aufgrund der hohen Prozesskräfte eine entsprechend stabile Dimensionierung der Schweißanlage und die Prozesskräfte müssen vom Spannsystem der zur verschweißenden Teile bzw. des Werkstücks aufgenommen werden. Eine aufwändige und oft räumlich umfangreiche Spanntechnik der Teile ist aus diesem Grund erforderlich, wobei die Probleme mit der Größe der Werkstücke wachsen und oft breite Portale zur Führung und Abstützung des Schweißwerkzeuges mit seinem Schweißkopf erforderlich sind.

Weiters treten bei ungenauer Prozessführung, verursacht durch Positionsabweichungen zwischen Rührreibwerkzeug und Werkstück, Poren oder Bindefehler in der Schweißnaht auf. Üblicherweise wird zur Abstützung der hohen Kräfte eine Unterlagsplatte verwendet, was jedoch bei ungenauerer Prozessführung zur Beschädigung des Rührreibwerkzeuges führen kann. Das Rührreibwerkzeug muss außerdem genau entlang des Fügespalts verfahren werden, wobei Abweichungen normal zur Vorschubbewegung zu Nahtqualitätsverlusten führen.

Üblicherweise wird beim Reibrührschweißen prozesstechnisch kein Zusatzwerkstoff verwendet, sodass auch eine Beeinflussung der Legierungszusammensetzung der Naht mit Hilfe eines Zusatzwerkstoffes nicht möglich ist.

Eine Aufgabe der Erfindung liegt darin, die zuvor genanten Nachteile der Vorrichtungen nach dem Stand der Technik auszuräumen oder zumindest zu verringern.

Diese Aufgabe wird mit einer Vorrichtung der eingangs genannten Art gelöst, bei welcher erfindungsgemäß zur Abstützung ein verlorener Zuganker vorgesehen ist, der mit seinem unteren Ende an dem Werkstück auf Zug abgestützt ist und an seinem oberen Ende eine Schiene zur Abstützung eines mit dem Schweißkopf oder -werkzeug mechanisch verbundenen Gegenstücks trägt, wobei ein zusätzliches, in Schweißrichtung gesehen vor dem Schweißkopf arbeitendes Zusatzwerkzeug zur Entfernung des oberen, über die Schweißebene vorstehenden Abschnitts des Zugankers aus dem Schweißbereich vorgesehen ist.

Dank der Erfindung wird der Großteil der auftretenden Kräfte unmittelbar durch den Zuganker aufgenommen, was eine kleinere Baugröße der Vorrichtung und der zugehörigen Spannsysteme ermöglicht. Durch die Verwendung des verlorenen Zugankers können Wurzelfehler und Beschädigungen des Schweißkopfes vermieden werden, denn der Rühr- bzw. Schweißvorgang kann bis nach unten in den Endbereich des Zugankers durchgeführt werden. Da der Zuganker mit seiner Schiene gleichzeitig als Führung dient, sind keine Nahtverfolgungssysteme erforderlich, um Positionsabweichungen des Schweißkopfes parallel zur Blechebene und normal zur Nahtrichtung zu verhindern.

Wenn im Zusammenhang mit der Erfindung von einem Werkstück die Rede ist, soll es klar sein, dass dieser Begriff sowohl zwei getrennte Teile, z.B. Platten, die miteinander zu verbinden sind, als auch ein einstückiges Teil, an dem eine Schweißnaht, z.B. eine Längs- oder Umfangsnaht an einem Rohr, auszuführen ist, umfassen soll.

Auch sind die Verwendung der Begriffe "oberes" und "unteres" Ende nicht einschränkend zu verstehen, da sich oben und unten hier auf eine bevorzugte, in der Zeichnung dargestellte, jedoch nicht notwendige Lage des Zugankers und der anderen Teile bezieht.

In einigen Fällen kann es zweckmäßig sein, wenn der Zuganker längs einer in Vorschubrichtung des Werkzeuges liegenden Ebene geteilt ist.

Falls dabei die beiden Teile des Zugankers mit den zu verschweißenden Werkstückteilen einstückig ausgebildet sind, erübrigt sich das Einlegen des Zugankers vor dem Verschweißen.

Bei einer weiteren zweckmäßigen Ausbildungsform kann vorgesehen sein, dass der Zuganker den Schweißbereich durchsetzt. Da der untere Teil des Zugankers im Werkstück verbleibt, wird dessen Werkstoff mit eingerührt, sodass die Möglichkeit eröffnet wird, für den Zuganker ein anderes Material zu verwenden, als jenes Material, aus welchem das Werkstück besteht, und die mechanischen/physikalischen Eigenschaften der Schweißnaht auf diesem Wege beeinflussbar sind.

Eine nicht zuletzt wegen ihrer Symmetrieeigenschaften zweckmäßige Ausführungsform zeichnet sich dadurch aus, der Zuganker im wesentlich doppel-T-förmig ist.

In Hinblick auf die erforderliche Bewegung zwischen Schiene und Gegenstück ist für eine andere zweckdienliche Ausführungsform vorgesehen, dass das Gegenstück zumindest eine frei drehbare Rolle aufweist.

Die teilweise oder vollständige Zerspanung des Oberteils des Zugankers kann besonders effizient erfolgen, wenn das Zusatzwerkzeug ein rotierender Fräser ist. Dabei ist es von besonderem Vorteil, wenn der rotierende Fräser koaxial mit dem Schweißkopf angeordnet ist.

Das Zusatzwerkzeug kann aber auch eine Säge sein, was sich vor allem dann empfiehlt, wenn der obere Abschnitt des Zugankers abgetrennt und dann aus dem Schweißbereich gebracht werden sollen.

Die Erfindung samt weiteren Vorteilen ist im Folgenden unter Bezugnahme auf die Zeichnung näher erläutert, in welcher zeigen:
- Fig. 1: eine geschnittene Draufsicht gemäß der Linie I-I der Fig. 3,
- Fig. 2: einen Schnitt nach Linie II-II der Fig.1,
- Fig. 3: eine Seitenansicht eines Teils der Vorrichtung gemäß Fig. 1, teilweise geschnitten,
- Fig. 4: ein Detail im Schnitt nach der Linie IV-IV der Fig. 3,
- Fig. 5: ein Detail der Vorrichtung im Schnitt nach V-V der Fig. 3,
- Fig. 6a, 6b und 6c: im Detail und in einem Schnitt verschiedene Varianten der Zerspanung des Oberteils des Zugankers und
- Fig. 7a bis 7c: in Schnitten wie in Fig. 6a bis 6c unterschiedliche Ausbildungen des Zugankers.

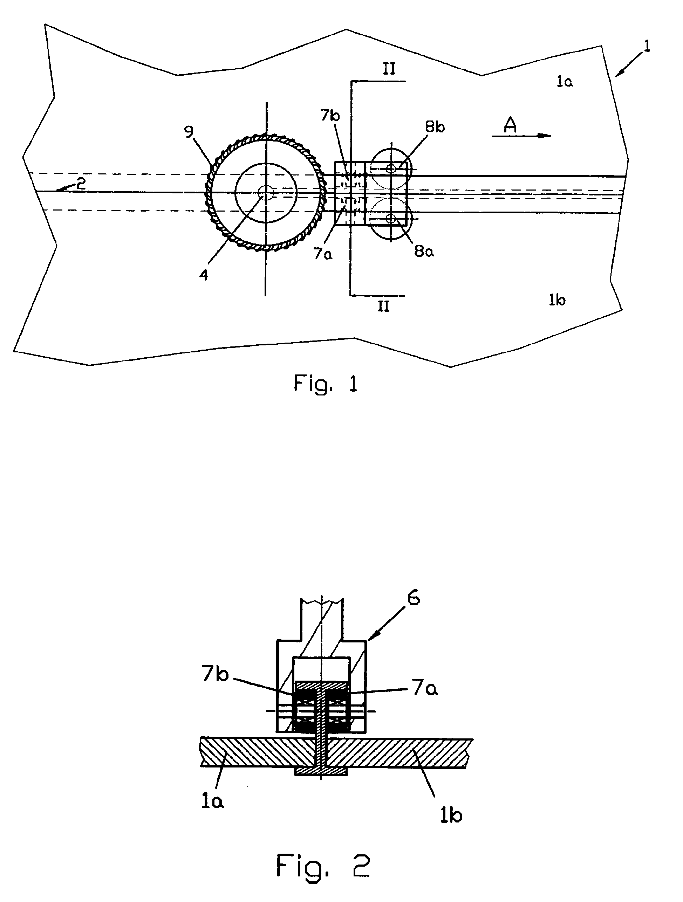

Unter Bezugnahme zunächst auf die Fig. 1 bis 5 wird eine Ausführungsform einer erfindungsgemäßen Vorrichtung erläutert, wobei vorausgesetzt wird, dass Vorrichtungen bzw. Anlagen zum Reibrührschweißen und ganz allgemein das Reibrührschweißverfahren dem Fachmann wohl bekannt sind. Es werden daher nur jene Teile der Vorrichtung erläutert und gezeigt, die für das Verständnis der Erfindung erforderlich sind.

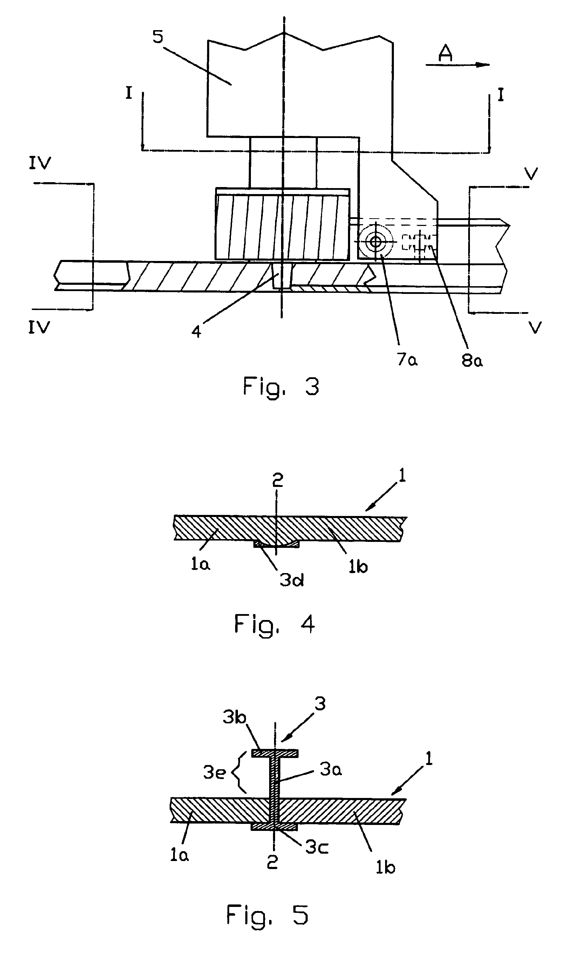

Ein Werkstück 1 an dem eine Schweißnaht 2, hier angedeutet durch ihre Mittellinie, ausgebildet werden soll, besteht im vorliegenden Fall aus zwei Werkstückteilen 1a, 1b, im vorliegenden Fall Platten 1a und 1b. Die Platten werden eingespannt und gehalten, z.B. auf eine entsprechende, hier nicht gezeigte Unterlage, beispielsweise einen Arbeitstisch aufgelegt, wobei in einen Spalt zwischen den Endflächen der Werkstückteile bzw. Platten 1a und 1b ein Zuganker 3 eingefügt wird. Dieser Zuganker 3 ist vorliegenden Ausführungsbeispiel doppel-T-förmig ausgebildet und besitzt einen in der Zeichnung senkrechten Steg mit einem Kopfteil 3b und einem Fußteil 3c (siehe Fig. 5). Das Werkstück 1 und der Zuganker 3 können aus gleichen oder unterschiedlichen Materialen bestehen, insbesondere aus Metallen, für welche sich das Verfahren des Reibrührschweißens eignet wie z. B. Aluminium, Magnesium und deren Legierungen oder Stahl, Eisenlegierungen etc.

Es soll erwähnt sein, dass in dem gezeigten Beispiel zwar zwei Platten 1a, 1b miteinander verbunden werden, doch kann es sich bei den zu verbindenden Enden beispielsweise auch um die Enden eines einstückigen Werkstücks, beispielsweise auch um die Enden einer zu einem Rohr zusammen gebogenen Bahn handeln. Es ist auch nicht zwingend, dass die Schweißnaht 2 gerade verläuft, sondern es sind auch gekrümmte Schweißnähte möglich, was selbstverständlich eine entsprechende Krümmung des Zugankers 3 voraussetzt. Die Vorrichtung nach der Erfindung besitzt ein Schweißkopf 5 mit einem bekannten Rührreibschweißwerkzeug 4, der durch einen nicht dargestellten Antrieb in Rotation versetzt wird und der im Allgemeinen einen rotierenden Stift besitzt, der aus einer zylindrischen Schulter vorsteht. Das rotierende Rührreibwerkzeug 4 wird durch einen entsprechenden Mechanismus gegen den Schweißbereich gedrückt, wobei ein weiterer, hier gleichfalls nicht gezeigter Antrieb für einen Vorschub in Vorschubrichtung A sorgt.

Die erwähnte Anpresskraft ist relativ hoch und dementsprechend müssen im Allgemeinen besondere Spannvorrichtungen vorgesehen sein, um unter anderem eine Deformation des Werkstücks oder eine Beschädigung des Rührreibschweißwerkzeugs zu vermeiden. Die Erfindung sieht nun als wesentliches Mittel zur Abstützung den Zuganker 3 vor, dessen Kopfteil 3b auch als Schiene zur Abstützung eines Gegenstücks 6 dient, welches mit dem Schweißkopf 5 oder mit den Rührreibwerkzeug 4 mechanisch verbunden ist. Bei der gezeigten Ausführungsform weist dieses Gegenstück 6 zwei horizontal gelagerte Rollen 7a, 7b auf, die an dem gabelförmigen Ende des Gegenstücks 6 frei drehbar gelagert sind und sich in der aus Fig. 2 ersichtlichen Weise an der Innenseite der Schiene bzw. des Kopfteils 3b an beiden Seiten abstützen. Zusätzlich können, wie in Fig. 1 angedeutet, an dem Gegenstück 6 auch zwei vertikal gelagerte Rollen 8a, 8b drehbar angeordnet sein, die sich, in Vorschubrichtung A vor den horizontal gelagerten Rollen 7a, b befinden und zur besseren Führung des Werkzeugs 4 an dem senkrechten Steg 3a des Zugankers 3 abstützen.

Der Zuganker 3 wird im Rahmen der Erfindung als verlorener Zuganker bezeichnet, da er nach der Herstellung der Naht, jedenfalls in seiner ursprünglichen Form, nicht mehr vorhanden ist. Der Zuganker 3 soll lediglich zur vorübergehenden Abstützung des Werkzeugs 4 bzw. Schweißkopfs 5 dienen und daher muss sein oberer Abschnitt, d. h. der über das Werkstück vorstehenden Abschnitt des Zugankers 3 abgetrennt, bzw. entfernt werden, bevor der Schweißkopf 5 die entsprechende Stelle erreicht. Zu diesem Zweck ist ein Zusatzwerkzeug 9 vorgesehen.

Sofern der Zuganker 3 nicht mit dem Werkstück 1 einstückig ausgebildet ist, was weiter unten an Hand eines Beispiels erläutert wird, ist er mit einem verbreiterten Fußteil 3c an oder unter dem Werkstück abgestützt.

Im vorliegenden Beispiel ist das Zugzusatzwerkzeug 9 als um eine horizontale Achse drehbarer Fräser ausgebildet, der koaxial mit dem Rührreibwerkzeug 4 rotieren kann. Wie aus den Fig. 1 und 3 hervorgeht, wird während des Vorschubs des Schweißkopfs 5 und des Fräsers 9 in Vorschubrichtung A kurz vor dem Einsatzbereich des Rührreibwerkzeug 4 der gesamte Oberteil des Zugankers 3e durch den Fräser zerspant und das Rührreibwerkzeug 4 verschweißt durch Rühren in der Folge nicht nur die beiden Platten 1a und 1b miteinander, sondern zieht in den Schweißvorgang auch den in der Fuge zwischen den beiden Platten 1a und 1b verbliebenen Teil des Zugankers 3, insbesondere den senkrechten Steg 3a und gegebenenfalls auch den Fußteil 3c mit ein.

Es soll insbesondere erneut auf die Fig. 5 und 4 verwiesen werden, wobei die Fig. 5 den Schweißbereich des Werkstücks 1 vor der Bearbeitung durch die erfindungsgemäße Vorrichtung und die Fig. 4 diesen Bereich nach der Bearbeitung, d. h. dem Zerspanen des Zugankers 3 und dem Verschweißen der beiden Platten 1a und 1b zeigt. Wie aus Fig. 4 ersichtlich, ist bei dem gezeigten Beispiel nur noch ein geringfügiger Rest 3d des ursprünglichen Zugankers 3 vorhanden.

Die oben beschriebene Ausführung mit dem koaxialen Fräskopf bzw. Fräser 9, der gegebenenfalls auch getrennt von den Schweißkopf 5 angetrieben werden kann, ist in vielen Fällen vorteilhaft, doch kann auch eine andere Form eines Fräsers verwendet werden, beispielsweise ein Fräser mit geringerem Durchmesser, der vollständig vor dem Schweißkopf 5 angeordnet ist, um den oberen Abschnitt des Zugankers 3 zu zerspanen.

Der Zuganker 3 dient zunächst zur erwünschten, im wesentlichen unmittelbaren Aufnahme der Kräfte ohne weite Umwege über das Werkstück oder Spanneinrichtungen, er dient jedoch andererseits auch als Führung für das Werkzeug 4 und dessen Schweißkopf 5 sowie den Fräser 9, nämlich insbesondere über die vertikal gelagerten Rollen 8a, b, aber auch über die horizontal gelagerten Rollen 7a, b, sodass besondere Nahtnachführsysteme entfallen können, die bei bekannten Vorrichtungen erforderlich sind. Wenngleich Rollen zur Abstützung und Führung zweckmäßig sind, kann die Abstützung und Führung beispielsweise auch durch nicht geführte, während des Schweißvorganges geschmierte Gleitstücke erfolgen.

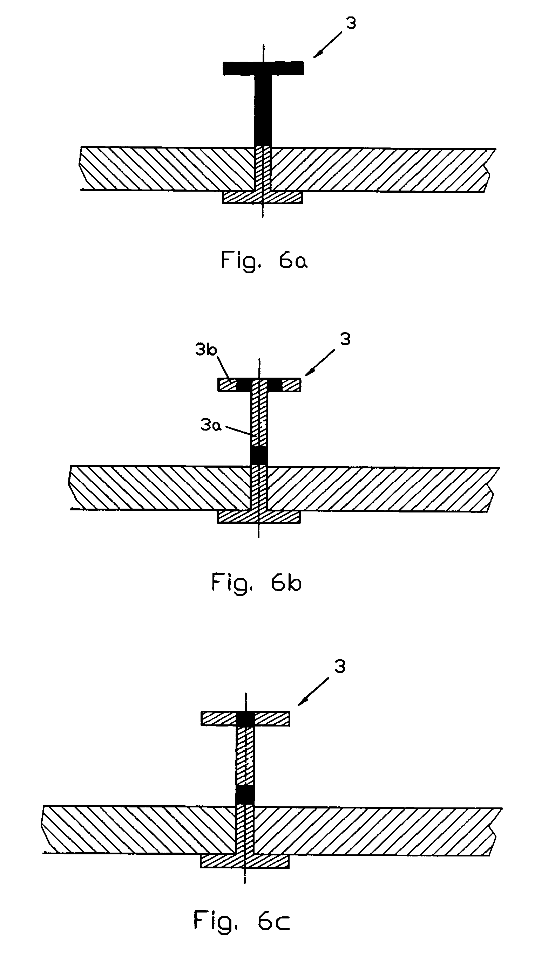

Unter Bezugnahme auf die Fig. 6a bis 6c wird gezeigt, dass gemäß Fig. 6a und wie vorhin beschrieben, der gesamte obere Abschnitt des Zugankers 3 zerspant werden kann, was in Fig. 6 durch eine Schwärzung gezeigt ist. Andererseits kann aber auch lediglich ein abschnittsweises Zerspanen stattfinden, wobei in Fig. 6b einerseits das Kopfteil 3b von dem Steg 3a und andererseits auch der Steg 3a von dem unteren Abschnitt des Zugankers 3 abgetrennt werden können. Hierzu können entweder entsprechend ausgebildete, auch komplexere Fräsvorrichtungen oder Sägen vorgesehen werden.

Eine andere Form des oberen Teils des Zugankers ist in Fig. 6c gezeigt. Hierbei teilt sich der Steg in der Mitte in einen horizontalen und zwei weitere vertikale Stege. Der obere Teil des Profils weist in diesem Fall die Form eines "U"s auf. Der horizontale Steg des "U"s wird beispielsweise durch das Zusatzwerkzeug 9 zerspannt.

Wenn nicht ein vollständiges Zerspanen gemäß Fig. 6b c vorgenommen wird, werden die verbliebenen Teile des Zugankers 3, der sich über den gesamten Schweißbereich erstreckt, während des Schweißens und des Vorschubs vorzugsweise seitlich vorbeigeführt oder weggebogen.

An dieser Stelle sei angemerkt, dass das Zusatzwerkzeug in Abhängigkeit von Material und Dimensionen des Zugankers auch von anderer zweckmäßiger Art sein kann und nicht auf die Ausführung eines zerspanenden Verfahrens beschränkt ist. So kommen auch Werkzeuge zum Laserstrahlschneiden in Betracht oder es kann sich um ein Schneidwerkzeug zum Schneiden, Abkanten oder Stanzen handeln.

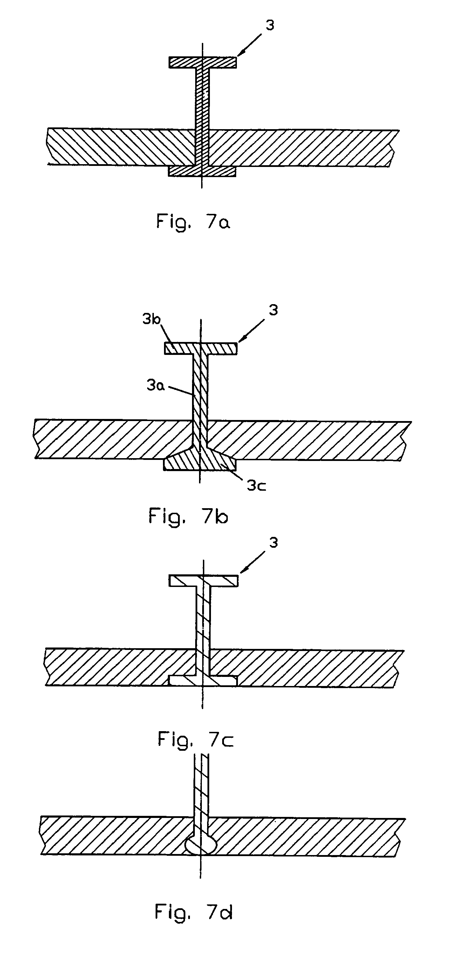

Varianten der Zugankerausbildung im Bereich eines "Doppel-T" sind in den Fig. 7a bis 7c gezeigt, wobei Fig. 7a die bereits aus Fig. 5 bekannte Ausbildung zeigt, der untere Teil des Zugankers ist jedoch vollständig im Werkstück 1 integriert. Fig. 7b zeigt eine Ausbildung, bei welcher der Fußteil 3c zum Teil im Werkstück 1 liegt und nach oben hin konisch ausgebildet ist, gleichfalls teilweise oder vollständig im Werkstück 1 bzw. zwischen den beiden Platten 1a, 1b aufgenommen ist.

Ausführungen nach den Fig. 7a, b können in manchen Fällen wünschenswert sein, insbesondere um die Optik an der Unterseite des Werkstücks 1 nicht zu stören, doch erfordern sie eine entsprechende Bearbeitung der beiden miteinander zu verbindenden Enden des Werkstücks 1. Es ist auch möglich den oberen Teil des Zugankers schon bei den zu verschweißenden Blechen vorzusehen(Fig. 7c).

Weiters kann es in manchen Fällen hilfreich sein den Zuganker entlang einer in Vorschubrichtung des Werkzeuges liegenden Ebene σ, im Allgemeinen der Symmetrieebene des Zugankers 3, teilbar zu gestalten, siehe beispielweise Fig. 6c, 7a, 7c.

Wenngleich in den Zeichnungen der Zuganker 3 symmetrisch dargestellt ist, ist eine solche Ausbildung nicht zwingend erforderlich. Wesentlich ist, dass der Kopfteil 3b des Zugankers 3, der als Schiene dient, so mit dem Gegenstück 6 zusammenwirken kann, dass er die auftretenden Zugkräfte aufnimmt und gegebenenfalls auch die Führungsfunktion übernimmt.

## Patentansprüche

1. Vorrichtung zur Herstellung einer Schweißnaht an Werkstücken durch Reibrührschweißen, das einen Schweißkopf (5) mit einem rotierenden Rührreibschweißwerkzeug (4), aufweist, welcher längs des Fügebereiches geführt und bezüglich des Werkstückes (1) abgestützt ist, wobei eine Schiene (3b) zur Abstützung eines mit dem Schweißkopf (5) oder dem Rührreibschweißwerkzeug (4) mechanisch verbundenen Gegenstücks (6) vorgesehen ist
**dadurch gekennzeichnet, dass**
zur Abstützung ein verlorener Zuganker (3) vorgesehen ist, der mit seinem unteren Ende an dem Werkstück (1) auf Zug verbunden ist und an seinem oberen Ende die Schiene (3b) trägt, wobei ein zusätzliches, in Schweißrichtung gesehen vor dem Rührreibwerkzeug (4) arbeitendes Zusatzwerkzeug (9) zur Entfernung des oberen, über die Schweißebene vorstehenden Abschnitts (3e) des Zugankers aus dem Schweißbereich vorgesehen ist.

2. Vorrichtung nach Anspruch 1, **dadurch gekennzeichnet, dass** der Zuganker (3) längs einer in Vorschubrichtung des Werkzeuges (4) liegenden Ebene (σ) geteilt ist (Fig. 6c, 7a, 7c).

3. Vorrichtung nach Anspruch 2, **dadurch gekennzeichnet, dass** die beiden Teile (3a, 3b) des Zugankers (3) mit den zu verschweißenden Werkstückteilen (1a, 1b) einstückig ausgebildet sind (Fig. 7c).

4. Vorrichtung nach Anspruch 1 oder 2, **dadurch gekennzeichnet, dass** der Zuganker (3) den Schweißbereich durchsetzt.

5. Vorrichtung nach einem der Ansprüche 1, 2 oder 4, **dadurch gekennzeichnet, dass** der Zuganker (3) an seinem unteren Ende mit einem verbreiterten Fußteil (3c) an dem Werkstück abgestützt ist.

6. Vorrichtung nach, einem der Ansprüche 1 bis 5, **dadurch gekennzeichnet, dass** der Zuganker (3) im wesentlich doppel-T-förmig ist.

7. Vorrichtung nach einem der Ansprüche 1 bis 6, **dadurch gekennzeichnet, dass** das Gegenstück (6) zumindest eine frei drehbare Rolle (7a, b; 8a,b) aufweist.

8. Vorrichtung nach einem der Ansprüche 1 bis 7, **dadurch gekennzeichnet, dass** das Zusatzwerkzeug (9) ein rotierender Fräser (9) ist.

9. Vorrichtung nach Anspruch 8, **dadurch gekennzeichnet, dass** der rotierende Fräser (9) koaxial mit dem Schweißkopf (5) angeordnet ist.

10. Vorrichtung nach einem der Ansprüche 1 bis 7, **dadurch gekennzeichnet, dass** Zusatzwerkzeug (9) eine Säge ist.

## Claims

1. Device for producing a weld seam on work pieces by means of friction stir welding, said device having a welding head (5) with a rotating friction stir welding tool (4) which is guided along the joining region and supported with respect to the work piece (1), wherein a rail (3b) for supporting a counter piece (6) that is mechanically connected to the welding head (5) or to the friction stir welding tool (4) is provided, **characterized in that**, for support, an irrecoverable tension rod (3) is provided, which is connected with its lower end to the work piece (1) in a tensioned manner, and which carries the rail (3b) on its upper end, wherein an additional supplementary tool (9) is provided, which works, when viewed in the direction of welding, in front of the friction stir welding tool (4), for removing the upper section (3e) of the tension rod protruding above the welding plane from the welding region.

2. Device according to Claim 1, **characterized in that** the tension rod (3) is divided along a plane (σ) extending in the direction of advance of the tool (4).

3. Device according to Claim 2, **characterized in that** the two portions (3a, 3b) of the tension rod (3) are designed to form a single piece with the work piece portions (1a, 1b) to be welded.

4. Device according to Claim 1 or 2, **characterized in that** the tension rod (3) passes through the welding region.

5. Device according to one of Claims 1, 2 or 4, **characterized in that** the tension rod (3) is supported at its lower end with a broadened foot portion (3c) on the work piece.

6. Device according to one of Claims 1-5, **characterized in that** the tension rod (3) is substantially in the shape of a double T.

7. Device according to one of Claims 1-6, **characterized in that** the counter piece (6) has at least one freely rotating roller.

8. Device according to one of Claims 1-7, **characterized in that** the supplementary tool (9) is a rotating milling tool (9).

9. Device according to Claim 8, **characterized in that** the rotating milling tool (9) is arranged coaxially with respect to the welding head (5).

10. Device according to one of Claims 1-7, **characterized in that** the supplementary tool (9) is a saw.

## Revendications

1. Dispositif de fabrication d'un cordon de soudure sur des pièces par soudage par friction malaxage qui présente une tête de soudage (5) avec un outil de soudage par friction malaxage (4) rotatif qui est guidé le long de la zone de joint et est en appui par rapport à la pièce (1), un rail (3b) étant prévu pour l'appui d'une pièce antagoniste (6) reliée mécaniquement à la tête de soudage (5) ou à l'outil de soudage par friction malaxage (4),
**caractérisé en ce**
**qu'**un tirant d'ancrage perdu (3) est prévu pour l'appui, lequel est relié en traction à son extrémité inférieure sur la pièce (1) et porte sur son extrémité supérieure le rail (3b), un outil supplémentaire (9) travaillant vu dans le sens de soudage avant l'outil de friction malaxage (4) étant prévu pour le retrait de la section supérieure (3e) dépassant du plan de soudage du tirant d'ancrage hors de la zone de soudage.

2. Dispositif selon la revendication 1, **caractérisé en ce que** le tirant d'ancrage (3) est divisé le long d'un plan (σ) se trouvant dans le sens d'avance de l'outil (4) (figures 6c, 7a, 7c).

3. Dispositif selon la revendication 2, **caractérisé en ce que** les deux parties (3a, 3b) du tirant d'ancrage (3) sont réalisées d'un seul tenant avec les parties de pièce (1a, 1b) à souder (figure 7c).

4. Dispositif selon la revendication 1 ou 2, **caractérisé en ce que** le tirant d'ancrage (3) traverse la zone de soudage.

5. Dispositif selon l'une quelconque des revendications 1, 2 ou 4, **caractérisé en ce que** le tirant d'ancrage (3) est en appui sur son extrémité inférieure avec une partie de pied (3c) élargie contre la pièce.

6. Dispositif selon l'une quelconque des revendications 1 à 5, **caractérisé en ce que** le tirant d'ancrage (3) est sensiblement en forme de double T.

7. Dispositif selon l'une quelconque des revendications 1 à 6, **caractérisé en ce que** la pièce antagoniste (6) présente au moins un rouleau librement rotatif (7a, b ; 8a, b).

8. Dispositif selon l'une quelconque des revendications 1 à 7, **caractérisé en ce que** l'outil supplémentaire (9) est une fraiseuse rotative (9).

9. Dispositif selon la revendication 8, **caractérisé en ce que** la fraiseuse rotative (9) est agencée coaxialement à la tête de soudage (5).

10. Dispositif selon l'une quelconque des revendications 1 à 7, **caractérisé en ce que** l'outil supplémentaire (9) est une scie.
